Europäisches Patentamt

European Patent Office

Office européen des brevets

(11) Publication number: **0 125 471**
**A2**

## (12) EUROPEAN PATENT APPLICATION

(21) Application number: **84103813.6**

(22) Date of filing: **06.04.84**

(51) Int. Cl.³: **A 01 N 25/16**

(30) Priority: **07.04.83 ZA 832443**

(43) Date of publication of application:
**21.11.84 Bulletin 84/47**

(84) Designated Contracting States:
**AT BE CH DE FR GB IT LI LU NL SE**

(71) Applicant: THE WELLCOME FOUNDATION LIMITED
183-193 Euston Road
London NW1 2BP(GB)

(72) Inventor: Steyn, Juliana Catherina
18 Golf Gardens 56 Garsfontein Street
Maroelana, Pretoria Transvaal(ZA)

(74) Representative: Sandmair, Kurt, Dr. Dr. et al,
Patentanwälte Dr. Berg Dipl.-Ing. Stapf Dipl.-Ing.
Schwabe Dr. Dr. Sandmair Postfach 86 02 45
Stuntzstrasse 16
D-8000 München 86(DE)

(54) Pesticidal composition.

(57) A pesticidal composition comprises a pesticide, a solvent and a foaming agent. Preferably the composition is packed in a pressurised can with a hydrocarbon propellant and a suitable valve. Such compositions may be sprayed onto all or part of an animal, particularly a pet, and the resulting foam collapses rapidly to deposit the pesticide onto the animal, thereby avoiding disdvantages of run-off. The pesticide may be a pyrethroid or organophosphate. The foaming agent may be a waxy material, for example a mixture of higher fatty alcohols and a surfactant.

EP 0 125 471 A2

Croydon Printing Company Ltd.

PESTICIDAL COMPOSITION

Many animals are plagued by ectoparasites, such as biting flies, ticks, lice and fleas, which harm or irritate the animal and may cause economic loss in commercially-exploited species, both by direct action and by carrying disease organisms. In addition, the pests may spread to humans.

For large animals, such as cattle, sheep and horses, established countermeasures include dipping the animal in a solution (or suspension) of a pesticide, spraying it with such a liquid, and pouring a small amount of a concentrated liquid onto a limited portion of the animal. Such techniques are acceptable on farms but are messy and wasteful of the pesticidal fluid when used in the house or even in stables. It has also been proposed to impregnate a sponge-like object with a pesticidal fluid for wiping onto the animal's coat (see, for example, U.S. Patent Specification No 3 496 589). However, such sponges can be difficult to handle without accidentally squeezing the fluid out, and penetration of the animal's coat can be poor. Only a liquid form of the pesticide can be used.

The present invention seeks to provide an improved pesticidal composition.

The present invention provides a pesticidal composition comprising a pesticide, a solvent and a foaming agent.

Conveniently, the pesticide is present in an amount of 0.01 to 50% by weight (more preferably 0.1 to 20%, most preferably 0.5 to 1%) and the foaming agent in an amount of 0.1 to 10% by weight (preferably 1 to 5%).

Whereas the composition may be whipped up by an outside mechanical agent such as a whisk to form a foam, it is preferably ready for direct use and comprises a means for blowing the foaming agent into a foam. Such a means may take the form of a flexible bottle in which the composition is supplied, the inside of the bottle being preferably provided with baffles or the like, so that repeated squeezing of the bottle creates the foam, which either may then be simply tipped out of the bottle or, by its expansion, may force itself out.

RSB/TJM/20th March, 1984

0125471

In a preferred arrangement, however, the composition is held under pressure in a container with a suitable valve for controlled release. Such a container is commonly termed an "aerosol can", although the material issuing from it may not strictly speaking be an aerosol. When the pressure is released, the contents are forced out of the container and the rapid reduction of pressure can cause a foam to be formed from dissolved gases. It is particularly advantageous to include a volatile hydrocarbon propellant which is easily liquefied at room temperature. The propellant may for example be Arcton 12/114 (60/40) in an amount of about 5 to 20%, conveniently about 8 to 12% by weight. "Arcton" is a trade name of I.C.I. Ltd. for a hydrocarbon propellant. Because the foam has a sound-deadening effect and emerges from the can as a liquid and more slowly than true aerosol compositions, the characteristic hiss of a true aerosol is usually not obtained with a composition of the invention. Since cats are often frightened by such a hiss, this can be a further advantage.

The foaming agent can be any suitable foaming agent such as a self-emulsifiable wax. A suitable wax may, for example, be that sold under the trade name "Polawax A31" by Croda Chemicals Ltd., Goole, U.K. This is a mixture of higher fatty alcohols and a non-ionic surfactant.

The solvent can be any suitable solvent or a mixture of solvents. One or more of propylene glycol, n-propyl alcohol, isopropyl myristate and butyl cellosolve may be used.

If desired, colouring materials, perfume materials, fillers and the like can be present.

Examples of pesticides which can be used are amitraz, synthetic pyrethroids (for example permethrin, optionally admixed with a synergist such as piperonyl butoxide), diazinon, dichlorvos, propoxur, tetrachlorvinphos, dursban, carbaryl, trichlorphos, famphur, pyrimiphos methyl, quinthiophos, chlorpyriphos methyl, temephos, lindane or chlorfenvinphos. Pesticides can be used singly or in combination.

RSB/TJM/20th March, 1984

W11
0125471

The composition provided by the invention is preferably sprayed onto an animal, for example along the back-line of the animal. The foam conveniently breaks quickly, to deposit the pesticide onto the animal. The foam should not be too stable (or the animal can rub it off), and it should not be too quick to disperse or too liquid (or it may run off the animal). Ideally, the foam should take from about 2 to 20 seconds to disperse or break, more preferably about 2 to 5 seconds to disperse. The foam may be collapsed by hand pressure and/or by the warmth of the animal. Compositions provided by the invention have been found to be simple and convenient to use and can be used in place of an insecticidal collar. Furthermore, they can be used to provide an even distribution of pesticide over the animal and have been found to overcome the problem of irritation caused by some insecticidal collars which create a concentration of insecticide around the neck area.

The compositions provided by the invention have been found to be useful for the control of ectoparasites in animals. Such ectoparasites include ticks, fleas, lice, mange mites, biting flies and nuisance flies. Altough the compositions are particularly suited to use of domestic pets, they can be used on other animals, such as cattle, pigs, horses, goats and sheep.

The invention is illustrated in non-limiting manner by reference to the following Examples:

RSB/TJM/20th March, 1984

## EXAMPLES 1 to 5

A composition was made from the constituents:

| | |
|---|---|
| Polawax A31 | 2% |
| n-Propyl alcohol | 6% |
| isopropyl myristate | 0.6% |
| butyl cellosolve | 5.4% |
| pesticide | 1% |
| Arcton 12/114 (60/40) | 10% |
| Propylene glycol | to 100% |

and packed in a pressurised spray can by conventional techniques.

The pesticides used were as follows: Example 1, permethrin; Example 2, dursban; Example 3, tetrachlorvinphos; Example 4, propoxur; Example 5, diazinon.

## EXAMPLE 6

| | |
|---|---|
| Polawax A31 | 3% |
| n-propyl alcohol | 6% |
| isopropyl myristate | 0.6% |
| butyl cellosolve | 5.4% |
| dursban | 1% |
| Arcton 12/114 (60/40) | 10% |
| propylene glycol | to 100% by weight |

RSB/TJM/20th March, 1984

## EXAMPLE 7

| | |
|---|---|
| Polawax A31 | 4% |
| n-propyl alcohol | 6% |
| isopropyl myristate | 0.6% |
| butyl cellosolve | 5.4% |
| permethrin | 1% |
| Arcton 12/114 (60/40) | 10% |
| deionised water | 29% |
| ethyl alcohol | to 100% |

The compositions of the Examples were applied as a foam in a zig-zag line along the backs and bellies of respective dogs in such quantities as to deliver approximately 10 to 20 mg of pesticide per kilogram of body weight, the precise amount being known by measuring the weight loss of the spray can. The dogs were then challenged with ticks and fleas weekly by being released onto a plot of land known to be infested with <u>Haemaphysalis</u> <u>leachi</u> ticks and by having 100 <u>Ctenocephalides felis</u> fleas placed on each of them. At a delivery level of approximately 15 mg/kg of pesticide, the compositions gave control of ticks for two to four weeks and of fleas for one to three weeks.

RSB/TJM/20th March, 1984

0125471

W1J

## Claims

1. A pesticidal composition comprising a pesticide and a solvent characterised in that the composition additionally comprises a foaming agent.

2. A composition according to claim 1 wherein the pesticide is a synthetic pyrethroid or an organophosphate.

3. A composition according to claim 1 or 2 wherein the foaming agent comprises at least one higher fatty alcohol and a surfactant.

4. A composition according to claim 3 wherein the surfactant is non-ionic.

5. A composition according to any one of claims 1 to 4 wherein the solvent is a lower alcohol.

6. A composition according to any one of claims 1 to 5 additionally comprising a blowing means for causing the foaming agent to form a foam.

7. A container having therein at a pressure greater than atmospheric pressure a composition according to claim 1, and having a valve to release the composition controllably.

8. A container according to claim 7 additionally containing a hydrocarbon propellant.

9. A method of combatting ectoparasites of an animal by applying to the animal a foam comprising a pesticide.

10. A method according to claim 9 wherein the foam is collapsed relatively quickly by the warmth of the animal and/or by application of pressure to the foam.

11. A foam comprising a pesticide.

RSB/TJM/20th March, 1984